# EUROPEAN PATENT APPLICATION

(11) **EP 4 670 820 A1**
(43) Date of publication of application: **31.12.2025**
(21) Application number: 24185403.3
(22) Date of filing: 28.06.2024
(51) Int. Cl.: B01D 53/04, C01B 3/56

(54) **A PURIFICATION ARRANGEMENT FOR PURIFYING HYDROGEN GAS**

(71) Applicant: VOLVO TRUCK CORPORATION, 405 08 Göteborg (SE)
(72) Inventor: Lundgren, Staffan, 438 53 Hindås (SE)
(74) Representative: Valea AB

(57) **Abstract**

The present disclosure relates to a purification arrangement, comprising:
- a purification device (301) comprising a housing (310) which in turn comprises at least one substrate (315) adapted to guide said hydrogen gas and to store impurities in the hydrogen gas;
- a hydrogen gas feeding guide (305a);
- a hydrogen gas discharging guide (305b);
- a regeneration gas feeding guide (304a);
- a regeneration gas discharging guide (304b),;
- a gas guiding assembly (320) adapted to assume each one of the following conditions:
∘ a hydrogen gas guiding condition in which each one of said hydrogen gas feeding guide (305a) and hydrogen gas discharging guide (305b) is in fluid communication with said at least one substrate (315),
∘ a regeneration gas guiding condition in which each one of said regeneration gas feeding guide (304a) and said regeneration gas discharging guide (304b) is in fluid communication with said at least one substrate (315).

## Description

### TECHNICAL FIELD

The disclosure relates generally to purification of hydrogen gas. In particular aspects, the disclosure relates to a purification arrangement for purifying hydrogen gas. The present disclosure also relates to a method of operating the purification arrangement. Moreover, the present disclosure relates to a fuel cell system and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In recent years, hydrogen gas has been considered as an energy source for various applications and/or systems. Purification devices for hydrogen gas are preferred in systems utilizing hydrogen gas, ensuring a desired performance of the systems. Hydrogen gas should preferably be purified to remove impurities such as moisture, sulfur compounds, and other contaminants that may degrade system components and reduce efficiency. Therefore, there is a need to develop improved technology relating to hydrogen purification devices.

### SUMMARY

According to a first aspect of the disclosure, a purification arrangement for purifying hydrogen gas is provided. The arrangement comprises:
- a purification device comprising a housing which in turn comprises at least one substrate adapted to guide the hydrogen gas and to store impurities in the hydrogen gas, preferably the impurities comprising carbon impurities and sulfur impurities;
- a hydrogen gas feeding guide, adapted to be connected to a source of hydrogen gas and to guide the hydrogen gas to the housing via a hydrogen gas inlet position of the housing being upstream the at least one substrate, as seen in an intended direction of flow of the hydrogen gas;
- a hydrogen gas discharging guide, adapted to guide the hydrogen gas from the housing via a hydrogen gas outlet position of the housing downstream the at least one substrate, as seen in an intended direction of flow of the hydrogen gas;
- a regeneration gas feeding guide, adapted to be connected to a source of regeneration gas and to guide regeneration gas to the housing via a regeneration gas inlet position of the housing upstream the at least one substrate, as seen in an intended direction of flow of the regeneration gas;
- a regeneration gas discharging guide, being different from the hydrogen gas discharging guide, adapted to guide the regeneration gas from the housing via a regeneration gas outlet position of the housing downstream the at least one substrate, as seen in an intended direction of flow of the regeneration gas;
- the purification arrangement further comprising a gas guiding assembly adapted to assume each one of the following conditions:
   ∘ a hydrogen gas guiding condition in which each one of the hydrogen gas feeding guide and hydrogen gas discharging guide is in fluid communication with the at least one substrate, and which each one of the regeneration gas feeding guide and regeneration gas discharging guide is prevented from being in fluid communication with the at least one substrate,
   ∘ a regeneration gas guiding condition in which each one of the regeneration gas feeding guide and the regeneration gas discharging guide is in fluid communication with the at least one substrate, and in which each one of the hydrogen gas feeding guide and hydrogen gas discharging guide is prevented from being in fluid communication with the at least one substrate.

The first aspect of the disclosure may seek to provide an improved purification arrangement. For instance, by providing the hydrogen gas feeding/discharging guide, and the regeneration gas feeding/discharging guide, and the gas guiding assembly, respectively, it may be possible to switch between a hydrogen gas guiding condition and a regeneration gas guiding condition within a single device. Herein, the hydrogen gas guiding condition may correspond to a purification mode during which hydrogen gas is feed to pass through the purification device, and the regeneration gas guiding condition may correspond to a regeneration mode during which regeneration gas is feed to pass through the purification device, for purging the purification device. A technical benefit may include that a compact solution with versatile functionality is achieved, which may enable the purification device to adapt to different operating modes, enhancing its efficiency and usability.

Optionally in some examples, including in at least one preferred example, the at least one substrate is adapted to store the impurities in the hydrogen gas by way of absorption. In this way, the impurities in the hydrogen gas may be removed effectively. A technical benefit may include that the hydrogen gas may be purified effectively.

Optionally in some examples, including in at least one preferred example, the purification arrangement comprises a heating member configured to heat the at least one substrate to a predefined temperature during a regeneration mode, the regeneration mode comprising arranging the gas guiding assembly so as to assume the regeneration gas guiding condition, such that absorbed impurities are desorbed from a surface of the at least one substrate at the predefined temperature. At the predefined temperature, the absorbed impurities may evaporate from the surface of the at least one substrate and subsequently exit the purification device, preferably with regeneration gas flowing past the surface. A technical benefit may include that the purification device is cleaned effectively after being operated under the hydrogen gas guiding condition for a period of time.

Optionally in some examples, including in at least one preferred example, the housing of the at least one purification device comprises an inner surface and an outer surface, the inner surface enclosing the least one substrate.

Optionally in some examples, including in at least one preferred example, the inner surface forms a fluid passage that extends between the hydrogen gas inlet position and the hydrogen gas outlet position along a first direction, and wherein the heating member comprises one or more heating spirals disposed on the outer surface of the housing, each heating spiral comprising spiral loops extending around a spiral centre axis being parallel to the first direction. A technical benefit may include an appropriate, possibly even an uniform, heating throughout the at least one substrate comprised in the housing of the purification device.

Optionally in some examples, including in at least one preferred example, the one or more heating spiral is a resistive heating spiral. By use of resistive heating, the at least one substrate may be heated to the predetermined temperature relatively fast.

Optionally in some examples, including in at least one preferred example, the purification arrangement further comprises a power source for supplying an electrical current to pass the resistive heating spiral.

Optionally in some examples, including in at least one preferred example, the regeneration gas is air. During the regeneration gas guiding condition, the air is feed to the housing, and the impurities of the hydrogen gas, such as carbon impurities and sulfur impurities, may react with oxygen of the air and convert to less harmful carbon dioxide and sulphur dioxide, before it exits the purification device. A technical benefit may include a reduced environmental impact from the impurities in the hydrogen gas.

Optionally in some examples, including in at least one preferred example, the purification arrangement further comprises a source of hydrogen gas fluidly connectable, preferably fluidly connected, to the hydrogen gas feeding guide.

Optionally in some examples, including in at least one preferred example, the purification arrangement further comprises a source of regeneration gas fluidly connectable, preferably fluidly connected, to the regeneration gas feeding guide.

Optionally in some examples, including in at least one preferred example, the source of regeneration gas comprises an air pump.

Optionally in some examples, including in at least one preferred example, the hydrogen gas inlet position and the regeneration gas inlet position are located on the same side of the at least one substrate, as seen in an intended direction of flow of the hydrogen gas, preferably the hydrogen gas inlet position is the same as the regeneration gas inlet position. By placing the hydrogen gas inlet position and the regeneration gas inlet position at the same side of the at least one substrate, it may allow for a more streamlined flow path for both the hydrogen gas and the regeneration gas. A technical benefit may include a simplified arrangement of the gas flow.

Optionally in some examples, including in at least one preferred example, the gas guiding assembly comprises an inlet valve assembly adapted to selectively fluidly connect one of the hydrogen gas feeding guide and the regeneration gas feeding guide to the housing. In this way, it may be possible to switch between the hydrogen gas guiding condition and the regeneration gas guiding condition by controlling operation of the inlet valve assembly. A technical benefit may include increased flexibility.

Optionally in some examples, including in at least one preferred example, the gas guiding assembly comprises an outlet valve assembly adapted to selectively fluidly connect one of hydrogen gas discharging guide and the regeneration gas discharging guide to the housing. In this way, it may be possible to switch between the hydrogen gas guiding condition and the regeneration gas guiding condition by controlling operation of the outlet valve assembly. A technical benefit may include increased flexibility.

Optionally in some examples, including in at least one preferred example, the at least one substrate comprises zeolite coated with metal or coated with catalytic. A technical benefit may include an enhanced adsorption of the impurities from gases, leading to improved purification efficiency and performance.

Optionally in some examples, including in at least one preferred example, the purification arrangement further comprises a temperature sensor for detecting a temperature of at the least one purification device.

According to a second aspect of the disclosure, a fuel cell system is provided. The fuel cell system comprises a fuel cell stack comprising an anode side and a cathode side, and the purification arrangement according to the first aspect of the present disclosure, for purifying hydrogen gas before the hydrogen gas is supplied to the anode side of the fuel cell stack. A technical benefit may include an improved performance of the fuel cell system.

Optionally in some examples, including in at least one preferred example, hydrogen gas discharging guide is in fluid communication with the anode side of the fuel cell stack.

Optionally in some examples, including in at least one preferred example, the purification arrangement comprises a first purification device and a second purification device. Optionally, each one of the first purification device and a second purification device is a purification device as presented above with relation to the first aspect of the disclosure. The hydrogen gas discharging guide of each one of the first purification device and the second purification device is in fluid communication with the anode side of the fuel cell stack.

Optionally in some examples, including in at least one preferred example, the fuel cell system can be operated in a condition in which the gas guiding assembly of the first purification device assumes the hydrogen gas guiding condition and in which the gas guiding assembly of the second purification device assumes the regeneration gas guiding condition. This may allow for continuous purification of hydrogen gas without interruptions, ensuring a steady supply of clean hydrogen to the fuel cell stack. A technical benefit may include improved enhanced purification efficiency.

According to a third aspect of the disclosure, a vehicle comprising the purification arrangement according to the first aspect of the disclosure and/or the fuel cell system according to the second aspect of the disclosure is provided.

According to a fourth aspect of the disclosure, a method of operating the purification arrangement according to the first aspect is provided. The method comprises:
- receiving a signal indicative of which condition should the purification arrangement should assume, and
- operating the gas guiding assembly to assume the indicated condition in response to the received signal.
Advantages and technical benefits of the fourth aspect of the disclosure are largely analogous to the advantages and technical benefits of the first aspect of the disclosure.

Optionally in some examples, including in at least one preferred example, the method comprises:
- in response to the received signal indicating that the regeneration gas guiding condition should be assumed, operating the gas guiding assembly such that each one of the regeneration gas feeding guide and the regeneration gas discharging guide is in fluid communication with the at least one substrate, and each one of the hydrogen gas feeding guide and hydrogen gas discharging guide is prevented from being in fluid communication with the at least one substrate.
- feeding regeneration gas from the regeneration gas feeding guide to pass through the purification device to the regeneration gas discharging guide.

Optionally in some examples, including in at least one preferred example, the regeneration gas comprises air, and the purification arrangement further comprises a heating member. The method further comprises:
- heating the at least one substrate to a predefined temperature, such that at the predefined temperature the impurities in the hydrogen gas, such as the carbon impurities and the sulfur impurities, are oxidized by oxygen of the air before they exit the purification device through the regeneration gas discharging guide.

Optionally in some examples, including in at least one preferred example, the method further comprises:
- in response to the received signal indicating that the hydrogen gas guiding condition should be assumed, detecting a temperature at the at least one purification device,
- in response to the detected temperature being lower than a threshold level,
- operating the gas guiding assembly such that each one of the hydrogen gas feeding guide and the regeneration gas discharging guide is in fluid communication with the at least one substrate, and each one of the regeneration gas feeding guide and the hydrogen gas discharging guide is prevented from being in fluid communication with the at least one substrate,
- feeding hydrogen gas from the hydrogen gas feeding guide to pass through the at least one purification device to the regeneration gas discharging guide for a predetermined time, such that remaining regeneration gas within the at least one purification device is displaced by the hydrogen gas and discharged through the regeneration gas discharging guide, and
- operating the gas guiding assembly such that each one of the hydrogen gas feeding guide and hydrogen gas discharging guide is in fluid communication with the at least one substrate, and each one of the regeneration gas feeding guide and regeneration gas discharging guide is prevented from being in fluid communication with the at least one substrate,
- feeding the hydrogen gas from the hydrogen gas feeding guide to pass through the at least one purification device to the hydrogen gas discharging guide.

In this way, possible remaining regeneration gas within at least one purification device may be displaced by the hydrogen gas and discharged through the regeneration gas discharging guide. The purification device may then be ready to operate in the purification mode. A technical benefit may include an appropriately low risk of feeding regeneration to the hydrogen gas discharging guide.

Optionally in some examples, including in at least one preferred example, the signal is caused to indicate the regeneration gas guiding condition should be assumed after the hydrogen gas guiding condition has been assumed for a predetermined time.

Optionally in some examples, including in at least one preferred example, the predetermined time is determined based on a surface area of the at least one substrate.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a schematic side view of a vehicle according to an example;
**FIG. 2** is a schematic view of a purification arrangement according to an example;
**FIG. 3** is a schematic view a purification arrangement according to another example;
**FIG. 4** is a schematic view of a fuel cell system according to an example;
**FIG. 5** is a schematic view of a fuel cell system according to another example;
**FIG. 6** is a flow chart illustrating a method of operating a purification arrangement, and
**FIG. 7** and **FIG. 8** are flow charts illustrating optional actions of the method of **FIG. 6****.**

### DETAILED DESCRIPTION

The detailed description set forth below provides information and examples of the disclosed technology with sufficient detail to enable those skilled in the art to practice the disclosure.

In recent years, hydrogen gas has been considered as an energy source for various applications and/or systems. Purification devices for hydrogen gas are preferred in these systems utilizing hydrogen gas, ensuring desired performance of the systems. Hydrogen gas should preferably be purified to remove impurities such as moisture, sulfur compounds, and other contaminants that may degrade system components and reduce efficiency. Therefore, there is a need to develop improved technology relating to hydrogen purification devices. The present disclosure may seek to provide an improved purification arrangement with versatile functionality, which may enable a purification device to adapt to different operating modes, enhancing its efficiency and usability.

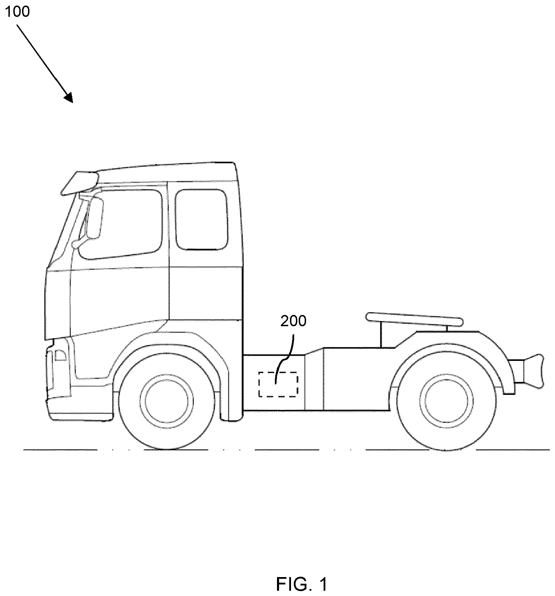

**FIG.** 1 depicts a side view of a vehicle 100 according to an example. The vehicle 100 is here a truck, more specifically a heavy-duty truck for towing one or more trailers (not shown). Even though a heavy-duty truck 100 is shown it shall be noted that the invention is not limited to this type of vehicle but may be used for any other type of vehicle, such as a bus, construction equipment, e.g., a wheel loader and an excavator, and a passenger car. The invention is also applicable for other applications not relating to vehicles as long as fuel cells are utilized.

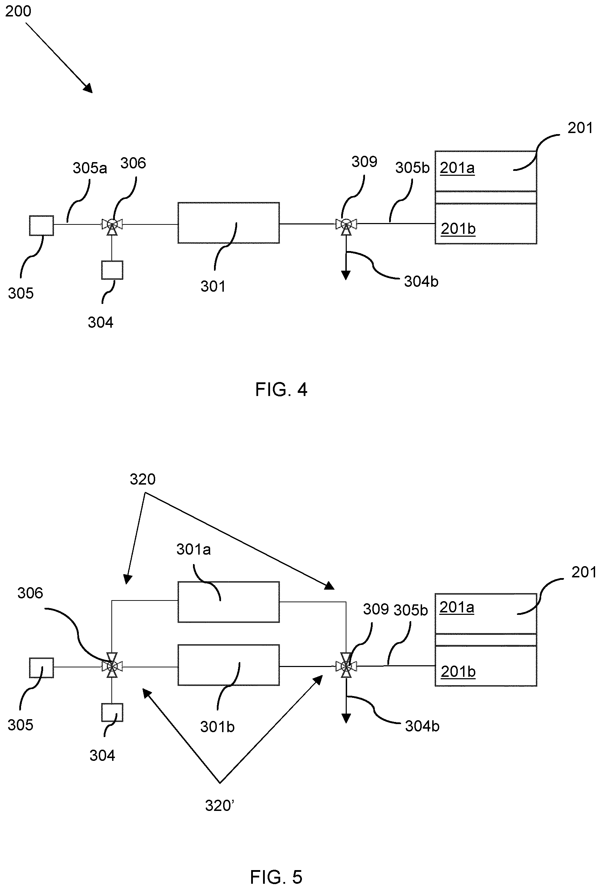

The vehicle 100 comprises a fuel cell system 200 according to an example. The fuel cell system 200 is here used for powering one or more electric motors (not shown) which are used for creating a propulsion force to the vehicle 100. The fuel cell system 200 may additionally or alternatively be used for powering other electric power consumers of the vehicle 200, such as an electric motor for a refrigerator system, an electric motor for an air conditioning system or any other electric power consuming function of the vehicle 100. The fuel cell system 200 may additionally or alternatively be used for charging one or more batteries (not shown) of the vehicle 100. More details of the fuel cell system 200 will be described along with **FIG. 4** and **FIG. 5** in later paragraphs.

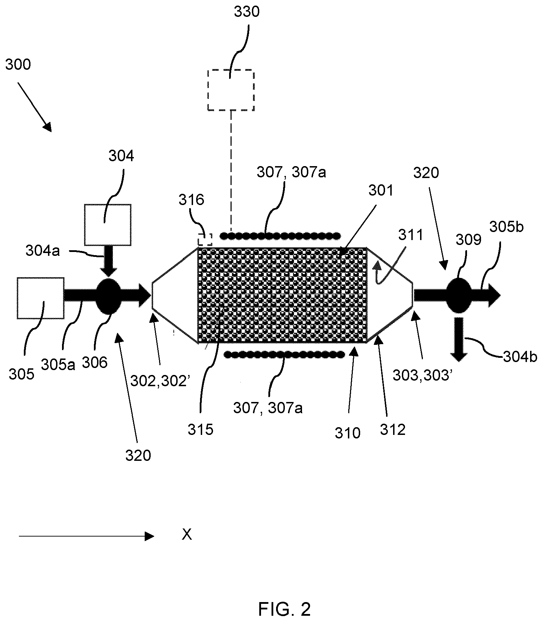

**FIG. 2** depicts a schematic illustration of a purification arrangement 300, that may be used in a fuel cell system, for instance, the **FIG. 1** fuel cell system 200, for purifying hydrogen gas before it is delivered to an anode of a fuel cell stack. However, it should be noted that a purification arrangement 300 according to the disclosure can also be used in other applications, for instance for purifying hydrogen gas before it is delivered to an internal combustion engine (not shown) which uses the hydrogen gas as fuel. The purification arrangement 300 comprises a purification device 300 comprising a housing 310 which in turn comprises at least one substrate 315 adapted to guide the hydrogen gas and to store impurities, such as carbon impurities and sulfur impurities, in the hydrogen gas. In some examples, the at least one substrate 315 may comprise zeolite coated with metal or coated with catalytic. Zeolites are generally known for their microporous crystalline structure, which may enable effective adsorption of contaminants or impurities from gases. In these examples, the at least one substrate is adapted to store the impurities in the hydrogen gas by way of absorption. The purification arrangement 300 further comprises a hydrogen gas feeding guide 305a, adapted to be connected to a source of hydrogen gas 305 and to guide the hydrogen gas to the housing 310 via a hydrogen gas inlet position 302 of the housing 310 upstream the at least one substrate 315, as seen in an intended direction X of flow of the hydrogen gas. Accordingly, the purification arrangement 300 may comprise a source of hydrogen gas 305 that is fluidly connectable, preferably fluidly connected, to the hydrogen gas feeding guide 305a. Furthermore, the purification arrangement 300 comprises a hydrogen gas discharging guide 305b, adapted to guide the hydrogen gas from the housing 310 via a hydrogen gas outlet position 303 of the housing 310 downstream the at least one substrate 315, as seen in an intended direction X of flow of the hydrogen gas. Moreover, the purification arrangement 300 comprises a regeneration gas feeding guide 304a, adapted to be connected to a source of regeneration gas 304 and to guide regeneration gas to the housing 310 via a regeneration gas inlet position 302 of the housing 310 upstream the at least one substrate 315, as seen in an intended direction X of flow of the regeneration gas. Accordingly, the purification arrangement 300 may comprise a source of regeneration gas 304 that is fluidly connectable, preferably fluidly connected, to the regeneration gas feeding guide 304a. Furthermore, the purification arrangement 300 comprises a regeneration gas discharging guide 304b, which is different from the hydrogen gas discharging guide 305b and is adapted to guide the regeneration gas from the housing 320 via a regeneration gas outlet position 303' of the housing 310 downstream the at least one substrate 315, as seen in an intended direction of flow X of the regeneration gas.

Moreover, the purification arrangement 300 further comprises a gas guiding assembly 320 adapted to assume each one of the following conditions: a hydrogen gas guiding condition in which each one of the hydrogen gas feeding guide 305a and hydrogen gas discharging guide 305b is in fluid communication with the at least one substrate 315, and which each one of the regeneration gas feeding guide 304a and regeneration gas discharging guide 304b is prevented from being in fluid communication with the at least one substrate 315, and a regeneration gas guiding condition in which each one of the regeneration gas feeding guide 304a and the regeneration gas discharging guide 304b is in fluid communication with the at least one substrate 315, and in which each one of the hydrogen gas feeding guide 305a and hydrogen gas discharging guide 305b is prevented from being in fluid communication with the at least one substrate 315. Herein, the hydrogen gas guiding condition may correspond to a hydrogen purification mode during which hydrogen gas is feed to pass through the purification device 301 for purification purpose, and the regeneration gas guiding condition may correspond to a regeneration mode during which regeneration gas is feed to pass through the purification device 301, for purging the purification device 301, e.g. for cleaning the at least one substrate 315.

The purification arrangement 300 may be switched between the hydrogen gas guiding condition and the regeneration gas guiding condition by controlling operations of the gas guiding assembly 320. More specifically, the gas guiding assembly 320 may comprise an inlet valve assembly 306 adapted to selectively fluidly connect one of the hydrogen gas feeding guide 305a and the regeneration gas feeding guide 304a to the housing 310 of the purification device 301, and an outlet valve assembly 309 adapted to selectively fluidly connect one of the hydrogen gas discharging guide 305b and the regeneration gas discharging guide 304b to the housing 310 of the purification device 301. Thus, by controlling operations of the inlet valve assembly 306 and/or the outlet valve assembly 309, the purification arrangement 300 can be switched between the above two conditions. Purely by way of example, and as indicated in **FIG. 2**, each one of the inlet valve assembly 306 and the outlet valve assembly 309 may comprise, or even be constituted by, a three-way valve.

In the illustrated example shown in **FIG. 2**, the purification device 301 comprises an inner surface 311 and an outer surface 312, whereby the inner surface 311 may enclose the substrate 315. The inner surface 311 may form a fluid passage that extends between the hydrogen gas inlet position 302 and the hydrogen gas outlet position 303 along a first direction X.

In some examples, the regeneration gas may comprise air, and the source of regeneration gas 304 may comprise an air pump. In these examples, during the regeneration gas guiding condition, the air is feed to the housing 310 of the purification device 301, and the impurities of the hydrogen gas, such as carbon impurities and sulfur impurities, may react with oxygen of the air and convert to less harmful carbon dioxide and sulphur dioxide, before they exit the purification device 300. In this way, environmental impacts from these impurities in the hydrogen gas may be reduced.

In some examples, the purification arrangement 300 may comprise a heating member 307 configured to heat the at least one substrate 315 to a predefined temperature during a regeneration mode. As mentioned above, the regeneration mode may comprise arranging the gas guiding assembly 320 so as to assume the regeneration gas guiding condition, such that absorbed impurities are desorbed from a surface of the at least one substrate 315 at the predefined temperature. In the examples where the regeneration gas is air, the predefined temperature may correspond to above a temperature level at which carbon and sulphur spices start to react with oxygen. In some examples, the heating member 307 may comprise one or more heating spirals 307a, for instance, one or more resistive heating spirals, disposed on the outer surface 312 of the housing 310, whereby each heating spiral 307a may comprise spiral loops extending around a spiral centre axis that is parallel to the first direction X. In these examples, the purification arrangement 300 may further comprise a power source 330, for instance a source of electric power, such as a battery, for supplying an electrical current to pass the resistive heating spiral 307a. The purification arrangement 300 may optionally further comprise a temperature sensor 316 for detecting a temperature of at the least one purification device 301.

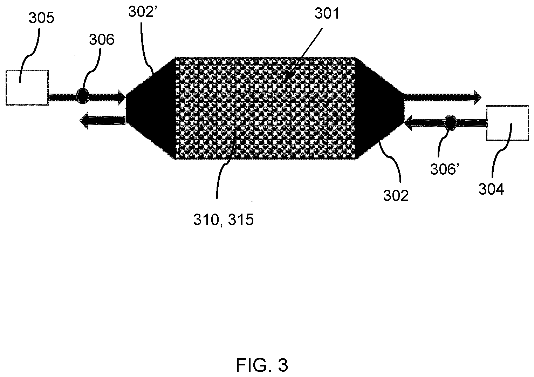

In the illustrated example shown in **FIG. 2**, the hydrogen gas inlet position 302 and the regeneration gas inlet position (302') are located on the same side of the at least one substrate 315, as seen in an intended direction of flow of the hydrogen gas, preferably the hydrogen gas inlet position 302 is the same as the regeneration gas inlet position 302'. In this way, it may allow for a more streamlined flow path for both the hydrogen gas and the regeneration gas. In some other examples, the hydrogen gas inlet position 302 and the regeneration gas inlet position 302' may be located on opposite sides of the at least one substrate 315, as shown in **FIG. 3****.**

**FIG. 4** illustrates a fuel cell system 200 according to an example. The fuel cell system comprises a fuel cell stack 201 that has an anode side 201a and a cathode side 201b. Each fuel cell (not illustrated in detail) comprises an anode catalyst (not shown) at the anode side and a cathode catalyst (not shown) provided on the cathode side. During operation, the anode catalyst may cause hydrogen gas to undergo oxidation reactions, generating ions and electrons. The ions move from the anode side 201a to the cathode side 201b via a membrane (not shown). Electrons flow from the anode side 201a to the cathode side 201b through an external circuit (not shown), producing electricity.

The fuel cell system 200 further comprises a purification arrangement, such as the **FIG. 2** purification arrangement 300 for purifying hydrogen gas before the hydrogen gas is supplied to the anode side 201a of the fuel cell stack 201. In these examples, the hydrogen gas discharging guide 305b may be in fluid communication with the anode side 201a of the fuel cell stack 201.

**FIG. 5** shows another example of a fuel cell system 200. In this example, the purification arrangement 300 may comprise a first purification device 301a and a second purification device 301b, whereby the hydrogen gas discharging guide 305b of each one of the first purification device 301a and said second purification device 301b is in fluid communication with the anode side 201a of the fuel cell stack 201. The fuel cell system 200 may be operated in a condition in which the gas guiding assembly 320 of the first purification device 301a assumes the hydrogen gas guiding condition and in which the gas guiding assembly 320' of the second purification device 301b assumes the regeneration gas guiding condition. This may allow for continuous purification of hydrogen gas without interruptions, ensuring a steady supply of clean hydrogen to the fuel cell stack. In the **FIG. 5** example, the gas guiding assembly 320 is schematically exemplified as comprising a shared valve upstream 306 upstream each one of the first and second purification devices 301a, 301b. However, it is also envisaged that in other examples, the gas guiding assembly 320 may comprise an individual upstream located valve (not shown) for each one of the first and second purification devices 301a, 301b. In a similar vein, in the **FIG. 5** example, the gas guiding assembly 320 is schematically exemplified as comprising a shared to valve 309 downstream each one of the first and second purification devices 301a, 301b. However, it is also envisaged that in other examples, the gas guiding assembly 320 may comprise an individual downstream valve (not shown) for each one of the first and second purification devices 301a, 301b.

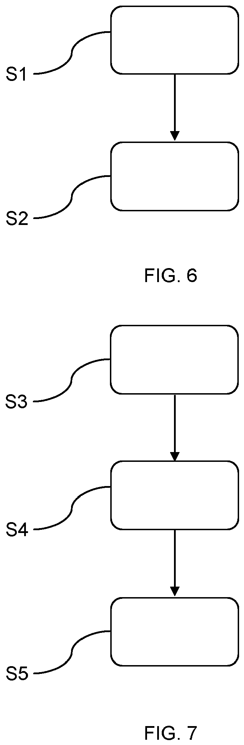

**FIG. 6** is a flow chart illustrating a method of operating a purification arrangement, such as the purification arrangement 300 illustrated in **FIG. 2**. The method comprises the actions listed in the following, which, unless otherwise indicated, may be taken in any suitable order.
**S1:** a signal indicative of which condition should the purification arrangement should assume, and
**S2:** operating the gas guiding assembly 320 to assume the indicated condition in response to the received signal.

**FIG. 7** shows optional actions when the signal indicating that the regeneration gas guiding condition should be assumed.

**S3:** in response to the received signal indicating that the regeneration gas guiding condition should be assumed, operating the gas guiding assembly 320 such that each one of the regeneration gas feeding guide 304a and the regeneration gas discharging guide 304b is in fluid communication with the at least one substrate 315, and each one of the hydrogen gas feeding guide 305a and hydrogen gas discharging guide 305b is prevented from being in fluid communication with the at least one substrate 315.

**S4:** feeding S4 regeneration gas from the regeneration gas feeding guide 304a to pass through the purification device 301 to the regeneration gas discharging guide 304b.

In the examples where the regeneration gas comprises air, and the purification arrangement comprises a heating member, the method may further comprise:

**S5:** heating the at least one substrate to a predefined temperature, such that at the predefined temperature the impurities in the hydrogen gas, such as the carbon impurities and the sulfur impurities, are oxidized by oxygen of the air before they exit the purification device 301 through the regeneration gas discharging guide 304b.

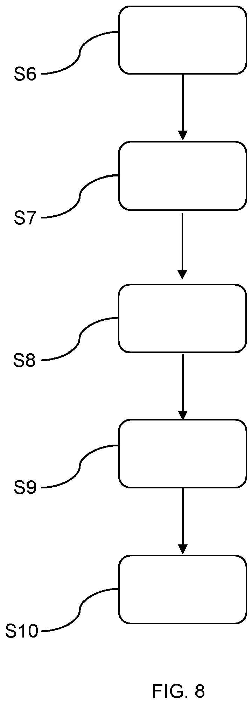

**FIG. 8** shows optional actions when the signal indicating that the hydrogen gas guiding condition should be assumed.

**S6:** in response to the received signal indicating that the hydrogen gas guiding condition should be assumed, detecting a temperature at the at least one purification device 301.

**S7:** in response to the detected temperature being lower than a threshold level, operating the gas guiding assembly 320 such that each one of the hydrogen gas feeding guide 305a and the regeneration gas discharging guide 304b is in fluid communication with the at least one substrate 315, and each one of the regeneration gas feeding guide 304a and hydrogen gas discharging guide 305b is prevented from being in fluid communication with the at least one substrate 315.
**S8:** feeding hydrogen gas from the hydrogen gas feeding guide 305a to pass through the at least one purification device 301 to the regeneration gas discharging guide 304b for a predetermined time, such that remaining regeneration gas within the at least one purification device 301 is displaced by the hydrogen gas and discharged through the regeneration gas discharging guide 304b,
**S9:** operating the gas guiding assembly 320 such that each one of the hydrogen gas feeding guide 305a and hydrogen gas discharging guide 305b is in fluid communication with the at least one substrate 315, and each one of the regeneration gas feeding guide 304a and regeneration gas discharging guide 304b is prevented from being in fluid communication with the at least one substrate 315, and
**S10:** feeding the hydrogen gas from the hydrogen gas feeding guide 305a to pass through the at least one purification device 301 to the hydrogen gas discharging guide 305b.

In some examples, the signal is caused to indicate the regeneration gas guiding condition should be assumed after the hydrogen gas guiding condition has been assumed for a predetermined time, whereby the predetermined time is determined based on a surface area of the at least one substrate 315.

Moreover, the present disclosure may be exemplified by any one of the below examples and combination of examples.

Example 1: A purification arrangement (300) for purifying hydrogen gas, comprising:
- a purification device (301) comprising a housing (310) which in turn comprises at least one substrate (315) adapted to guide said hydrogen gas and to store impurities in the hydrogen gas, preferably the impurities comprising carbon impurities and sulfur impurities;
- a hydrogen gas feeding guide (305a), adapted to be connected to a source of hydrogen gas (305) and to guide said hydrogen gas to said housing (310) via a hydrogen gas inlet position (302) of said housing (310) being upstream said at least one substrate (315), as seen in an intended direction of flow of said hydrogen gas;
- a hydrogen gas discharging guide (305b), adapted to guide said hydrogen gas from said housing (310) via a hydrogen gas outlet position (303) of said housing downstream said at least one substrate (315), as seen in an intended direction of flow of said hydrogen gas;
- a regeneration gas feeding guide (304a), adapted to be connected to a source (304) of regeneration gas and to guide regeneration gas to said housing (310) via a regeneration gas inlet position (302') of said housing (310) upstream said at least one substrate (315), as seen in an intended direction of flow of said regeneration gas;
- a regeneration gas discharging guide (304b), being different from said hydrogen gas discharging guide (305b), adapted to guide said regeneration gas from said housing (320) via a regeneration gas outlet position (303') of said housing downstream said at least one substrate (315), as seen in an intended direction of flow of said regeneration gas;
- said purification arrangement (300) further comprising a gas guiding assembly (320) adapted to assume each one of the following conditions:
   ∘ a hydrogen gas guiding condition in which each one of said hydrogen gas feeding guide (305a) and hydrogen gas discharging guide (305b) is in fluid communication with said at least one substrate (315), and which each one of said regeneration gas feeding guide (304a) and regeneration gas discharging guide (304b) is prevented from being in fluid communication with said at least one substrate (315),
   ∘ a regeneration gas guiding condition in which each one of said regeneration gas feeding guide (304a) and said regeneration gas discharging guide (304b) is in fluid communication with said at least one substrate (315), and in which each one of said hydrogen gas feeding guide (305a) and hydrogen gas discharging guide (305b) is prevented from being in fluid communication with said at least one substrate (315).

Example 2: The purification arrangement (300) according to Example 1, wherein the at least one substrate (315) is adapted to store the impurities in the hydrogen gas by way of absorption.

Example 3: The purification arrangement (300) according to any one of the preceding Examples, further comprising a heating member (307) configured to heat the at least one substrate (315) to a predefined temperature during a regeneration mode, said regeneration mode comprising arranging said gas guiding assembly (320) so as to assume said regeneration gas guiding condition, such that absorbed impurities are desorbed from a surface of the at least one substrate (315) at the predefined temperature.

Example 4: The purification arrangement (300) according to Example 3, wherein the housing (310) of the at least one purification device (301) comprises an inner surface (311) and an outer surface (312), the inner surface (311) enclosing said least one substrate (315).

Example 5: The purification arrangement (300) according to Example 4, wherein the inner surface (311) forms a fluid passage that extends between the hydrogen gas inlet position (302) and the hydrogen gas outlet position (303) along a first direction (X), and wherein the heating member (307) comprises one or more heating spirals (307a) disposed on the outer surface (311) of the housing (310), each heating spiral (307a) comprising spiral loops extending around a spiral centre axis being parallel to the first direction (X).

Example 6: The purification arrangement (300) according to Example 4 or Example 5, wherein the one or more heating spiral (307a) is a resistive heating spiral.

Example 7: The purification arrangement (300) according to Example 6, further comprising a power source (330) for supplying an electrical current to pass the resistive heating spiral (307a).

Example 8: The purification arrangement (300) according to any one of the preceding Examples, wherein the regeneration gas is air.

Example 9: The purification arrangement (300) according to any one of the preceding Examples, further comprising a source of hydrogen gas (305) fluidly connectable, preferably fluidly connected, to said hydrogen gas feeding guide (305a).

Example 10: The purification arrangement (300) according to any one of the preceding Examples, further comprising a source of regeneration gas (304) fluidly connectable, preferably fluidly connected, to said regeneration gas feeding guide (304a).

Example 11: The purification arrangement (300) according to Example 10, when dependent on Example 8, wherein said source of regeneration gas comprises an air pump.

Example 12: The purification arrangement (300) according to any one of the preceding Examples, wherein said hydrogen gas inlet position (302) and said regeneration gas inlet position (302') are located on the same side of said at least one substrate (315), as seen in an intended direction of flow of said hydrogen gas, preferably said hydrogen gas inlet position (302) is the same as said regeneration gas inlet position (302').

Example 13: The purification arrangement (300) according to Example 11, wherein said gas guiding assembly (320) comprises an inlet valve assembly (306) adapted to selectively fluidly connect one of said hydrogen gas feeding guide (305a) and said regeneration gas feeding guide (304a) to said housing (310).

Example 14: The purification arrangement (300) according to Example 11 or Example 12, wherein said gas guiding assembly (320) comprises an outlet valve assembly (309) adapted to selectively fluidly connect one of hydrogen gas discharging guide (305b) and said regeneration gas discharging guide (304b) to said housing (310).

Example 15: The purification arrangement (300) according to any one of the preceding Examples, wherein the at least one substrate (315) comprises zeolite coated with metal or coated with catalytic.

Example 16: The purification arrangement (300) according to any one of the preceding Examples, further comprises a temperature sensor (316) for detecting a temperature of at the least one purification device (301).

Example 17: A fuel cell system (200) comprises:
- a fuel cell stack (201) comprising an anode side (201a) and a cathode side (201b), and
- the purification arrangement (300) according to any one of Examples 1-16 for purifying hydrogen gas before the hydrogen gas is supplied to the anode side (201a) of the fuel cell stack (201).

Example 18: The fuel cell system (200) according to Example 17, wherein said hydrogen gas discharging guide (305b) is in fluid communication with said anode side (201a) of the fuel cell stack (201).

Example 19: The fuel cell system (200) according to according to any one of the Examples 17-18, wherein the purification arrangement (300) comprises a first purification device (301a) and a second purification device (301b), wherein the hydrogen gas discharging guide (305b) of each one of said first purification device (301a) and said second purification device (301b) is in fluid communication with said anode side (201a) of the fuel cell stack (201).

Example 20: The fuel cell system (200) according to according to Example 19, wherein the fuel cell system (200) can be operated in a condition in which the gas guiding assembly (320) of said first purification device (301a) assumes said hydrogen gas guiding condition and in which the gas guiding assembly (320) of said second purification device (301b) assumes said regeneration gas guiding condition.

Example 21: A vehicle comprising the purification arrangement (300) according to any one of Examples 1 - 16 or a fuel cell system (200) according to Examples 17-20.

Example 22: A method of operating the purification arrangement (300) according to any one of Examples 1-16, comprising:
- receiving (S 1) a signal indicative of which condition should said purification arrangement should assume, and
- operating (S2) the gas guiding assembly (320) to assume the indicated condition in response to the received signal.

Example 23: The method according to Example 22, further comprising:
- in response to said received signal indicating that the regeneration gas guiding condition should be assumed, operating (S3) the gas guiding assembly (320) such that each one of said regeneration gas feeding guide (304a) and said regeneration gas discharging guide (304b) is in fluid communication with said at least one substrate (315), and each one of said hydrogen gas feeding guide (305a) and hydrogen gas discharging guide (305b) is prevented from being in fluid communication with said at least one substrate (315).
- feeding (S4) regeneration gas from the regeneration gas feeding guide (304a) to pass through the purification device (301) to said regeneration gas discharging guide (304b).

Example 24: The method according to Example 23, wherein the regeneration gas comprises air, and wherein the purification arrangement further comprises a heating member, the method further comprising:
- heating (S5) the at least one substrate to a predefined temperature, such that at said predefined temperature the impurities in the hydrogen gas, such as the carbon impurities and the sulfur impurities, are oxidized by oxygen of the air before they exit the purification device (301) through said regeneration gas discharging guide (304b).

Example 25: The method according to any one of Examples 22-24, further comprising:
- in response to the received signal indicating that the hydrogen gas guiding condition should be assumed, detecting (S6) a temperature at the at least one purification device (301),
- in response to the detected temperature being lower than a threshold level,
- operating (S7) the gas guiding assembly (320) such that each one of said hydrogen gas feeding guide (305a) and said regeneration gas discharging guide (304b) is in fluid communication with said at least one substrate (315), and each one of said regeneration gas feeding guide (304a) and hydrogen gas discharging guide (305b) is prevented from being in fluid communication with said at least one substrate (315)
- feeding (S8) hydrogen gas from the hydrogen gas feeding guide (305a) to pass through the at least one purification device (301) to the regeneration gas discharging guide (304b) for a predetermined time, such that remaining regeneration gas within the at least one purification device (301) is displaced by the hydrogen gas and discharged through said regeneration gas discharging guide (304b), and
- operating (S9) the gas guiding assembly (320) such that each one of said hydrogen gas feeding guide (305a) and hydrogen gas discharging guide (305b) is in fluid communication with said at least one substrate (315), and each one of said regeneration gas feeding guide (304a) and regeneration gas discharging guide (304b) is prevented from being in fluid communication with said at least one substrate (315),
- feeding (S10) the hydrogen gas from the hydrogen gas feeding guide (305a) to pass through the at least one purification device (301) to the hydrogen gas discharging guide (305b).

Example 26: The method according to any one of Examples 22-26, wherein the signal is caused to indicate the regeneration gas guiding condition should be assumed after the hydrogen gas guiding condition has been assumed for a predetermined time.

Example 27: The method according to Example 27, wherein the predetermined time is determined based on a surface area of the at least one substrate (315).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A purification arrangement (300) for purifying hydrogen gas, comprising:
- a purification device (301) comprising a housing (310) which in turn comprises at least one substrate (315) adapted to guide said hydrogen gas and to store impurities in the hydrogen gas, preferably the impurities comprising carbon impurities and sulfur impurities;
- a hydrogen gas feeding guide (305a), adapted to be connected to a source of hydrogen gas (305) and to guide said hydrogen gas to said housing (310) via a hydrogen gas inlet position (302) of said housing (310) being upstream said at least one substrate (315), as seen in an intended direction of flow of said hydrogen gas;
- a hydrogen gas discharging guide (305b), adapted to guide said hydrogen gas from said housing (310) via a hydrogen gas outlet position (303) of said housing downstream said at least one substrate (315), as seen in an intended direction of flow of said hydrogen gas;
- a regeneration gas feeding guide (304a), adapted to be connected to a source (304) of regeneration gas and to guide regeneration gas to said housing (310) via a regeneration gas inlet position (302') of said housing (310) upstream said at least one substrate (315), as seen in an intended direction of flow of said regeneration gas;
- a regeneration gas discharging guide (304b), being different from said hydrogen gas discharging guide (305b), adapted to guide said regeneration gas from said housing (320) via a regeneration gas outlet position (303') of said housing downstream said at least one substrate (315), as seen in an intended direction of flow of said regeneration gas;
- said purification arrangement (300) further comprising a gas guiding assembly (320) adapted to assume each one of the following conditions:
∘ a hydrogen gas guiding condition in which each one of said hydrogen gas feeding guide (305a) and hydrogen gas discharging guide (305b) is in fluid communication with said at least one substrate (315), and which each one of said regeneration gas feeding guide (304a) and regeneration gas discharging guide (304b) is prevented from being in fluid communication with said at least one substrate (315),
∘ a regeneration gas guiding condition in which each one of said regeneration gas feeding guide (304a) and said regeneration gas discharging guide (304b) is in fluid communication with said at least one substrate (315), and in which each one of said hydrogen gas feeding guide (305a) and hydrogen gas discharging guide (305b) is prevented from being in fluid communication with said at least one substrate (315).

2. The purification arrangement (300) according to claim 1, further comprising a heating member (307) configured to heat the at least one substrate (315) to a predefined temperature during a regeneration mode, said regeneration mode comprising arranging said gas guiding assembly (320) so as to assume said regeneration gas guiding condition, such that absorbed impurities are desorbed from a surface of the at least one substrate (315) at the predefined temperature.

3. The purification arrangement (300) according to any one of claims 1-2, wherein the housing (310) of the at least one purification device (301) comprises an inner surface (311) and an outer surface (312), the inner surface (311) enclosing said least one substrate (315).

4. The purification arrangement (300) according to claim 3, wherein the inner surface (311) forms a fluid passage that extends between the hydrogen gas inlet position (302) and the hydrogen gas outlet position (303) along a first direction (X), and wherein the heating member (307) comprises one or more heating spirals (307a) disposed on the outer surface (311) of the housing (310), each heating spiral (307a) comprising spiral loops extending around a spiral centre axis being parallel to the first direction (X).

5. The purification arrangement (300) according to any one of the preceding claims, wherein the regeneration gas is air.

6. The purification arrangement (300) according to any one of the preceding claims, further comprising a source of hydrogen gas (305) fluidly connectable, preferably fluidly connected, to said hydrogen gas feeding guide (305a).

7. The purification arrangement (300) according to any one of the preceding claims, further comprising a source of regeneration gas (304) fluidly connectable, preferably fluidly connected, to said regeneration gas feeding guide (304a).

8. The purification arrangement (300) according to any one of the preceding claims, wherein said hydrogen gas inlet position (302) and said regeneration gas inlet position (302') are located on the same side of said at least one substrate (315), as seen in an intended direction of flow of said hydrogen gas, preferably said hydrogen gas inlet position (302) is the same as said regeneration gas inlet position (302').

9. The purification arrangement (300) according to claim 8, wherein said gas guiding assembly (320) comprises an inlet valve assembly (306) adapted to selectively fluidly connect one of said hydrogen gas feeding guide (305a) and said regeneration gas feeding guide (304a) to said housing (310).

10. The purification arrangement (300) according to claim 8 or claim 9, wherein said gas guiding assembly (320) comprises an outlet valve assembly (309) adapted to selectively fluidly connect one of hydrogen gas discharging guide (305b) and said regeneration gas discharging guide (304b) to said housing (310).

11. A fuel cell system (200) comprises:
- a fuel cell stack (201) comprising an anode side (201a) and a cathode side (201b), and
- the purification arrangement (300) according to any one of claims 1-16 for purifying hydrogen gas before the hydrogen gas is supplied to the anode side (201a) of the fuel cell stack (201).

12. The fuel cell system (200) according to according to claim 11, wherein the purification arrangement (300) comprises a first purification device (301a) and a second purification device (301b), wherein the hydrogen gas discharging guide (305b) of each one of said first purification device (301a) and said second purification device (301b) is in fluid communication with said anode side (201a) of the fuel cell stack (201).

13. The fuel cell system (200) according to according to claim 12, wherein the fuel cell system (200) can be operated in a condition in which the gas guiding assembly (320) of said first purification device (301a) assumes said hydrogen gas guiding condition and in which the gas guiding assembly (320) of said second purification device (301b) assumes said regeneration gas guiding condition.

14. A vehicle comprising the purification arrangement (300) according to any one of claims 1 - 10 or a fuel cell system (200) according to claims 11-13.

15. A method of operating the purification arrangement (300) according to any one of claims 1-10, comprising:
- receiving (S 1) a signal indicative of which condition should said purification arrangement should assume, and
- operating (S2) the gas guiding assembly (320) to assume the indicated condition in response to the received signal.
